# EUROPEAN PATENT APPLICATION

(11) **EP 4 358 329 A1**
(43) Date of publication of application: **24.04.2024**
(21) Application number: 22201980.4
(22) Date of filing: 17.10.2022
(51) Int. Cl.: H02G 3/22, H02G 3/06

(54) **CABLE GLAND**

(71) Applicant: ABB SCHWEIZ AG, 5400 Baden (CH)
(72) Inventor: DUDZIK, Rafal, 31-462 Cracow (PL); POLEDNIA, Filip, 43-300 Bielsko-Biala (PL)
(74) Representative: Maiwald GmbH

(57) **Abstract**

The present invention relates to a cable gland (10) comprising a base tube (14) for passing a cable through a housing wall (38) and tightening nuts (30, 34), with which the base tube (14) can be fixed to the housing wall (38). The cable gland (10) further comprises a sensing unit (50) comprising at least one sensor for measuring an environmental condition, a processor (54) for collecting and analyzing the measurement values of the sensor, and an information output device (58) for providing information about the measurement values and/or analyzation results.

## Description

### FIELD OF THE INVENTION

The present invention relates to a cable gland.

### BACKGROUND OF THE INVENTION

Cable glands are widely known in the prior art. The cable gland thereby mainly has the function to guide a cable into a housing or through a wall. The cable thereby is fixed by the cable gland to protect the cable against pulling out of the housing or of the wall.

Prior art DE 10 2015 208 395 A1 discloses cable/conduit entry for the introduction and passage of at least one cable into and through a wall opening of a housing wall. The cable/conduit entry comprises an insertion sleeve for insertion in the wall opening, wherein the insertion sleeve comprises a flange for abutting against the housing wall. The cable/conduit further comprises on axial end a screw-on clamp part. On the other axial end a fixing section is provided by the insertion sleeve, which fixing section is configured so that a clamping part can be provided thereon to pressing the flange against the housing wall.

US 8,895,878 B2 discloses a cable feedthrough comprising a cable fixing unit with a fixing housing which is provided with a cable fixing member and a holding section as well as a shield contact element which makes contact with a cable shield of a cable which is guided through the cable feedthrough. The cable feedthrough having a mounting unit connectable to a wall section of an appliance. The mounting unit is connected to the cable fixing unit in a form locking manner and the mounting unit being designed such that it provides an electrically conductive connection between the shield contact element and the wall section. The cable fixing unit engages with the holding section in a receptacle of the mounting unit and is fixed in it in a form locking manner.

### SUMMARY OF THE INVENTION

The problem to be solved by the present invention is to improve a cable gland.

The problem is solved by cable gland having the features of claim 1. Advantageous embodiments of the invention are specified in the dependent claims.

According to the invention a cable gland is discloses, which comprises a base tube for passing a cable through a housing wall and tightening nuts, with which the base tube can be fixed to the housing wall. The cable gland further comprises a sensing unit comprising at least one sensor for measuring an environmental condition, a processor for collecting and analyzing the measurement values of the sensor, and an information output device for providing information about the measurement values and/or analyzation results.

An environmental condition thereby is a measurable condition, which the cable gland undergo. According to the invention, the term processor comprises every electronic circuit or component, which is able for collecting and analyzing respectively processing the measurement values of the sensor. The expression information-output-device comprises devices which merely forwarding the information to another device or directly visually, acoustically or haptically providing the information.

The cable gland according to the present invention therefore is not only used for guiding a cable through a housing wall, but also provides information about the environment conditions. Therefore, a separate device for recording the environment conditions is not necessary. As the information are provided by the cable gland, space for a separate device can be saved, so that a device equipped with such a cable gland can be reduced in size. Further, as cable gland not only measures the environment conditions but also analysing these conditions, predefined boundaries can be defined. When these boundaries are exceeded, the information output device issue a respective indication. This has the advantage that it can be early recognized that the boundaries are exceeded, so that a damage of a respective device can be prevented. Expenses for damaged devices therefore can be saved.

In a preferred embodiment of the invention, the information output device comprises a lighting device, an audio device, a text device, a color indicator device and/or a picture-indicating device. Preferably, these devices are directly provided at the cable gland. By doing so, a user directly optically or acoustically get information about the condition of the cable gland respectively a device mounted thereto. The output of information therefore is simplified.

In a further preferred embodiment, the information output device comprises a radio communication device for transmitting the information to an external device. The radio communication device thereby can be a Bluetooth or other wireless communication device. By transmitting the data via a radio communication device a user can monitor the cable the values measured by the cable gland from a remote location. This is particularly advantageous for places that are difficult to access. Monitoring of the cable gland respectively of the measured values is therefore simplified.

Advantageously, the processor, the sensing unit and/or the information output device are provided on a common printed circuit board. A printed circuit board can be designed as a small part. As the respective parts are arranged on a common circuit board, these parts can be provided in a small manner. Accordingly, for these parts only a small space is necessary, so that they can be provided in a cable gland.

Preferably, the sensing unit comprises a vibration sensor, a temperature sensor, a current supply sensor and/or a magnetic field sensor. With these sensors, essential value of a device to be monitored by the cable gland can be measured. Therefore, no further measuring device is necessary.

In a further advantageous development, a power supply is provided for supplying at least the sensing unit, the processor and the information output device with electric power. With a power supply, a continuous operation of these parts can be guaranteed. Therefore, a device to be monitored by the cable gland can be continuous monitored without the risk of missing a point where a value of the device exceeds a limit value.

In a preferred embodiment, the power supply is provided by a coil, which is arranged so as to circumferential surrounding a cable passing through the base tube. The cable thereby preferably is a power supply cable. By providing the coil around the cable, the cable can be supplied with power via induction.

A preferred embodiment specifies that the coil is used as a current sensor. A current measurement of the power supply cable thereby is simplified.

### BRIEF DESCRIPTION OF THE DRAWINGS

The subject matter of the Invention will be explained in more details in the following description illustrated in the drawings, in which:
- Figure: Embodiment of the cable gland according to the invention.

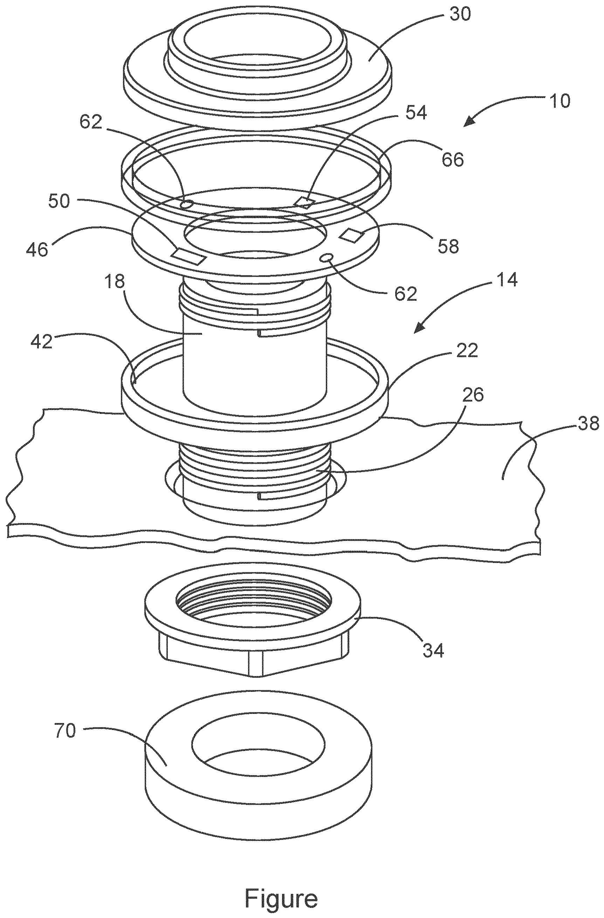

The Figure shows an embodiment of a cable gland 10 according to the invention. The cable gland 10 thereby comprises a base tube 14 having a cylindrical portion 18 through which a cable (not shown) can be passed through. The base tube 14 further comprises flange portion 22, which is integrally provided with the cylindrical portion 18 and which extends in a radial direction therefrom. In a region of both axial ends of the cylindrical portion 18 a thread 26 is provided. The cable gland 10 further comprises a first tightening nut 30 and a second tightening nut 34, which can be screwed onto the cylindrical portion 18 of the base tube 14. When the second tightening nut 34 is screwed to the cylindrical portion 18, a housing wall 38, which is provided between the flange portion 22 and the second tightening nut 34, is clamped between both parts, so that the cable gland 10 is fixed to the housing wall 38.

At a side facing to the first tightening nut 30 the flange portion 22 provides coaxial recess 42. The cable gland 10 further comprises a ring shaped printed circuit board 46, which is shaped to fit into the coaxial recess 42 of the flange portion 22. Thereby, a total axial length of the cable gland 10 can be reduced. On the printed circuit board 46 a sensing unit 50 is provided, which in this embodiment comprises a vibration sensor, for measuring the vibration that the cable gland 10 receive. The printed circuit board 46 further comprises a processor 54 for collecting and analysing the measurement values of the vibration sensor.

On the printed circuit board 46 also an information output device 58 is provided. The information output device 58 in this embodiment comprises lighting device 62, which is provided by LED diodes. In case the processor 54 recognizes that the vibration values pass a limit value, a light signal is issued by the LED diodes 62. The light signal thereby can be a red light. For the visualization of the light signal the LED diodes 62 interact with a transparent ring 66, which is arranged between the first tightening nut 30 and the printed circuit board 46. The information output device 58 in this embodiment also comprises a radio communication device, with which the information can be transmitted via e.g. a Bluetooth connection.

For powering the information output device 58, the lighting device 62 and the processor a power supply 70 is provided. In this embodiment, the power supply is provided as a coil 70, which surrounds the cylindrical portion 18 of the base tube 14. The electric coil 70 itself in this embodiment is embedded in a plastic ring. The coil 70 also can be used as a current sensor, measuring the current of a cable passing through the cylindrical part 18. Although, the coil 70 in this embodiment is provided behind the second tightening nut 34, the coil 70 also can be arranged between the housing wall 38 and the second tightening nut 34.

### List of reference numbers

- 10: cable gland
- 14: base tube
- 18: cylindrical portion
- 22: flange portion
- 26: thread
- 30: first tightening nut
- 34: second tightening nut
- 38: housing wall
- 42: coaxial recess
- 46: printed circuit board
- 50: sensing unit
- 54: processor
- 58: information output device
- 62: lighting device/ LED diodes
- 66: transparent ring
- 70: power supply/Coil

## Claims

1. Cable gland (10) comprising:
- A base tube (14) for passing a cable through a housing wall (38),
- Tightening nuts (30, 34), with which the base tube (14) can be fixed to the housing wall (38),
- A sensing unit (50) comprising at least one sensor for measuring an environmental condition,
- A processor (54) for collecting and analyzing the measurement values of the sensor, and
- An information output device (58) for providing information about the measurement values and/or analyzation results.

2. Cable gland (10) according to claim 1, **characterized in that** the information output device (58) comprises a lighting device (62), an audio device, a text device, a color indicator device and/or a picture-indicating device.

3. Cable gland (10) according to claim 1 or 2, **characterized in that** the information output device (58) comprises a radio communication device for transmitting the information to an external device.

4. Cable gland (10) according to one of the preceding claims, **characterized in that** the processor (54), the sensing unit (50) and/or the information output device (58) are provided on a common printed circuit board (46).

5. Cable gland (10) according to one of the preceding claims, **characterized in that** the sensing unit (50) comprises a vibration sensor, a temperature sensor, a current supply sensor and/or a magnetic field sensor.

6. Cable gland (10) according to one of the preceding claims, **characterized in that** a power supply (70) is provided for supplying at least the sensing unit (50), the processor (54) and the information output device (58) with electric power.

7. Cable gland (10) according to claim 6, **characterized in that** the power supply (70) is provided by a coil, which is arranged so as to circumferential surrounding a cable passing through the base tube (14).

8. Cable gland (10) according to claim 7, **characterized in that** the coil (70) is used as a current sensor.
